# EUROPEAN PATENT APPLICATION

(11) **EP 2 530 056 A1**
(43) Date of publication of application: **05.12.2012**
(21) Application number: 11462008.1
(22) Date of filing: 03.06.2011
(51) Int. Cl.: C02F 3/12, C02F 1/44

(54) **Apparatus and method for filtering sludge**

(71) Applicant: Uwatech Környezet és Viztechnikai Kft., 8372 Cserszegtomaj (HU)
(72) Inventor: Kohlheb, Robert, 8372 Cserszegtomaj (HU); Láng, Péter, 1125 Budapest (HU); Nagy, András, 1031 Budapest (HU); Poós, Tibor, 8460 Devescer (HU)
(74) Representative: Harangozo, Gabor

(57) **Abstract**

The present invention relates to an apparatus and a method for sludge filtration.

The method comprises providing a filtering module (14) inside a container (12), said filtering module comprising micro-porous membranes and being open both at the bottom and at the top thereof; feeding sludge with relatively low solid material content into the container (12); vibrating the filtering module (14) at a predetermined frequency and at a substantially constant amplitude by means of an external vibrator (30); injecting air into the bottom of the filtering module (14) thereby circulating the sludge within the container (12); and discharging, from the container (12), the concentrated sludge and the permeate, as well as the injected air and the gases releasing from the sludge.

## Description

The present invention generally relates to treating sludge. More particularly, the present invention relates to an apparatus and a method for filtering mainly industrial sludge or municipal waste-water sludge.

Waste-water purification plants and those plants treating industrial sludge, which are widely used nowadays, commonly apply a filtering container, in which the industrial sludge or municipal waste-water sludge having relatively low solid material content is directed through micro-porous filtering membranes. Due to their small pore size, the filtering membranes retain the solid material content of the sludge on one of their sides, while the liquid contained in the sludge is allowed to pass therethrough. The two phases thus separated, namely, the sludge phase having a relatively high density and high solid material content, and the liquid phase (permeate) are both discharged from the filtering container as raw materials for further processing. In order to prevent the sludge from adhering on the filtering membranes, the filtering membranes are continuously vibrated by means of air bubbles added to the sludge. Such filtering method is disclosed, for example, in the document JP 2000197884 A.

In the aforementioned filtering apparatus, the air bubbles are used to vibrate the filtering membranes. Due to the sludge portion coming apart from the membranes because of the vibration, the sludge gets concentrated in the lower part of the container, therefore the movement of the air bubbles in the concentrated sludge becomes increasingly difficult, which results in a reduced vibration effect to the membranes. Because of the reduced vibration effect, the pores of the filtering membranes can be clogged more easily, causing a reduction in the filtering efficiency.

It is an object of the present invention to avoid the above mentioned deficiencies and to provide an improved filtering apparatus and filtering method that allows a substantially more efficient sludge filtration than before.

The above objects are achieved by providing a method for sludge filtration comprising
- providing a filtering module inside a container, said filtering module comprising micro-porous membranes and being open both at the bottom and at the top thereof,
- feeding sludge with relatively low solid material content into the container,
- vibrating the filtering module at a predetermined frequency and at a substantially constant amplitude by means of an external vibrator,
- injecting air into the bottom of the filtering module thereby circulating the sludge within the container, and
- discharging, from the container, the concentrated sludge and the permeate, as well as the injected air and the gases releasing from the sludge.

The above objects are further achieved by providing a filtering apparatus for sludge filtration, the apparatus comprising a container and a membrane-type filtering module arranged inside the container and formed open both at the bottom and at the top thereof, and wherein a pipe for feeding sludge with relatively low density into the container, a pipe for discharging the concentrated sludge from the container and a pipe for discharging the permeate are connected to the container. The apparatus further comprises:
- a vibrator for vibrating the filtering module at a predetermined frequency and at a substantially constant amplitude during the filtration process,
- pipes for conveying the circulation air to the container and for conveying, from the container, the air and the gases releasing from the sludge during the filtration process, and
- a flexible tube arranged inside the container for conveying the circulation air to the bottom of the filtering module, and another flexible tube arranged inside the container for conveying the permeate.

The invention will now be described in more detail with reference to the drawings, in which
Figure 1 illustrates a schematic arrangement of the filtering apparatus according to the invention,
Figure 2 shows schematic perspective view of a membrane filtering module used in the filtering apparatus shown in Figure 1, and
Figure 3 shows a graph illustrating the specific flow rate of the sludge through a membrane-type filtering module as a function of time in a preferred embodiment of the method according to the invention.

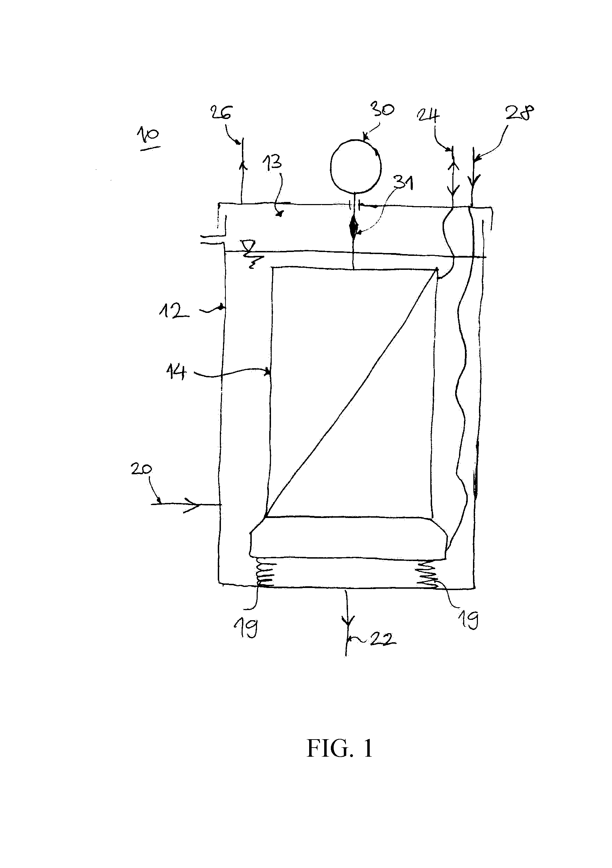

As shown in Figure 1, the filtering apparatus 10 according to the present invention comprises a container 12 within which a membrane-type filtering module 14 is arranged. The biologically purified sludge having a relatively low solid material content, typically 4-6%, is fed into the container 12 through a pipe 20. The sludge may be any one of industrial sludge and sludge originating from the purification process of municipal waste-water. The separated solid material is discharged through a pipe 22, whereas the permeate is discharged through another pipe 24 from the container 12. It is preferred that the membrane module 14 is entirely immersed in the sludge within the container 12.

It is a key feature of the apparatus according to the invention that instead of using air bubbles to vibrate the membranes, the air bubbles are rather used to circulate the sludge inside the container. Accordingly, air is injected into the filtering module 14 at the bottom thereof, thus the air bubbles developing in the sludge and then moving upwards will tend to entrain the solid material particles suspended in the sludge, causing the sludge to flow upwards and then to flow back downwards inside the container 12, but outside the filtering module 14, down to the bottom of the container 12. The air bubbles moving in the sludge, however, are used not only to circulate the sludge, but also to aerate the sludge, which is of special importance for the concentrated sludge forming at the bottom of the container 12.

In the filtering apparatus 10 according to the invention, instead of using air bubbles for vibrating the membranes of the filtering module 14 as conventionally used in the prior art, now the entire membrane-type filtering module 14 in the container 12 is vibrated by means of an external vibrator 30. To this end, the membranes are fixedly mounted inside the filtering module 14. The vibrator 30 is adapted to continuously vibrate the filtering module 14 at a predetermined frequency and at a substantially constant amplitude.

Due to the vibration, the sludge are capable of adhering on the outer surface of the membranes of the filtering module 14 and inside the pores thereof only to a limited extent. Vibrating the filtering module 14 has the further advantage that by means of the vibration, the separated sludge tends to settle in the container 12 due to its density higher than that of the water, and thereby some sludge having a substantially higher density as compared to the density of the input sludge will accumulate at the bottom of the container 12.

The vibration rate of the filtering module 14 preferably ranges between 100 to 3000 1/min. A particularly efficient filtration may be achieved by a vibration rate of approximately 700 1/min. The vibration amplitude of the vibrator 30 preferably ranges between 0.1 and 10 mm, wherein the preset value of the basic amplitude greatly depends on the density and the material content of the input sludge, as well as the flow rate to be achieved. Preferably, the filtering module 14 is arranged within the container 12 in such a way that during the entire period of the vibration process, the entire module is immersed in the sludge. To this end, in idle state, the top of the filtering module 14 is preferably arranged at a level at least 10 mm below the surface of the sludge within the container 12.

When fixedly mounted filtering membranes are used, the input sludge with a solid material content of typically 4 to 6% can be pushed through the membranes at a specific flow rate of approximately 20 to 50 l/m²h. However, in the apparatus according to the invention, due to the vibration of the membrane module 14, the specific flow rate can reach a maximum values between 180 and 230 l/m²h, and the solid material content of the sludge retained by the filtering module 14 may increase up to 15 to 20%. It is noted that using the invention, such an increased solid material content may be achieved even without adding any thickening agent.

In the apparatus according to the invention, the entire volume of the container 12 is not filled with sludge, as above the surface of the sludge, a headspace 13 for the circulating air mixed with gases releasing from the sludge is arranged. The mixed air and gases are discharged from this headspace 13 through a pipe 26 and then subsequently purified upon demand. The air used to circulate the sludge inside the container 12 is conveyed into the container 12, more particularly into the bottom of the filtering module 14, by means of a pipe 28.

Since the circulating air bubbles can move in the concentrated sludge more difficultly, the flow rate of the sludge through the filtering module 14 tends to gradually decrease as the sludge is getting more concentrated, which results in an increase of the filtering period. To overcome this problem, in a preferred embodiment of the apparatus according to the invention, a suitable granulate is added to the sludge, said granulate providing further aeration for the concentrated sludge and thereby allowing the air bubbles to move in the sludge more easily. As a result, the flow rate of the sludge will increase in the filtering module 14 and the filtering period (i.e. the time needed for separating the permeate from the sludge of unit volume) will be shorter. After the concentrated sludge mixed with the granulate has been discharged from the container 12, the granulate is separated from the discharged sludge by means of an appropriate filter and optionally, it may be returned back to the container 12. The granulate may include plastic granules, typically made of some kind of polymer, such as polyurethane granules, but it may be an adsorbing granulate, such as organic granulate, preferably made from activated carbon, or even inorganic granulate, preferably made from zeolite. The material of the granulate is selected according to the technological parameters, and even multiple granulates may be utilized at the same time.

So as to allow vibration of the membrane-type filtering module 14, it is coupled to the container 12 through a flexible joint. According to an exemplary embodiment, the bottom of the housing of the filtering module 14 is coupled to the bottom of the container 12 by means of springs, preferably conical spiral springs, as it is schematically illustrated in Figure 1.

The vibrator 30 is rigidly coupled to the filtering module 14 in such a way that a vibrating arm 31 of the vibrator 30 is rigidly connected preferably to the top of the housing 15 of the filtering module 14. With respect to the fact that during the filtering process the weight of the filtering module 14 (depending on the volume of the sludge adhered on the membranes), and also the density of the sludge (and thereby also the value of the buoyant force acting to the filtering module 14) may all vary, it is preferred that the vibrator 30 is coupled to the rigid vibrating arm 31 through a hydraulic cylinder (not shown), which is led through the cover of the container 12 to the filtering module 14. Thereby the actual vibration amplitude of the filtering module 14 is somewhat reduced in case of a more concentrated sludge, whereas said amplitude is somewhat higher for a more dilute sludge. Due to the interposed hydraulic cylinder, the motor of the vibrator 30 is prevented from the excessive load resulted from a possible thickening of the sludge exceeding an allowed limit. In the apparatus according to the invention, for the vibrator 30 the external electric vibrator NES 2510 of Netter GmbH, for example, may be suitable.

It is preferred that the vibrating arm 31 is made of metal so as to bear the high loads and it is guided in a thin plastic pipe (not shown). For example, for a metal vibrating arm with 40 mm diameter, a plastic guiding tube with a wall thickness of, for example, 5 mm may be suitable. By guiding the vibrating arm 31, the filtering module 14 can be vibrated in one direction, in the present case in vertical direction. In another preferred embodiment of the apparatus according to the invention, the vertical guidance of the filtering module may also be provided by a sliding member mounted on the side-walls of the housing of the filtering module 14 along at least a portion thereof, said sliding member being adapted to slide in respective guiding elements formed on the inner walls of the container 12. In this embodiment, the friction between the sliding members of the filtering module 14 and the guiding elements of the container 12 is small enough due to the lubrication provided by the sludge.

The concentrated sludge phase and the permeate resulted from the filtration process may be conveyed to subsequent technological processes in a conventional manner and may be utilized in many ways. For example, the filtered water, after further purification when needed, may be used either processing water of irrigation water, or it may be also used to dilute the sludge circulated within the container by means of air bubbles when the sludge within the container has got concentrated to a greater extent than allowed during the filtering process. Upon treating the separated sludge concentrate by means of an aerobic culture or an ultrasound treatment, the sludge may be used as an excellent raw material, for example, in biogas production.

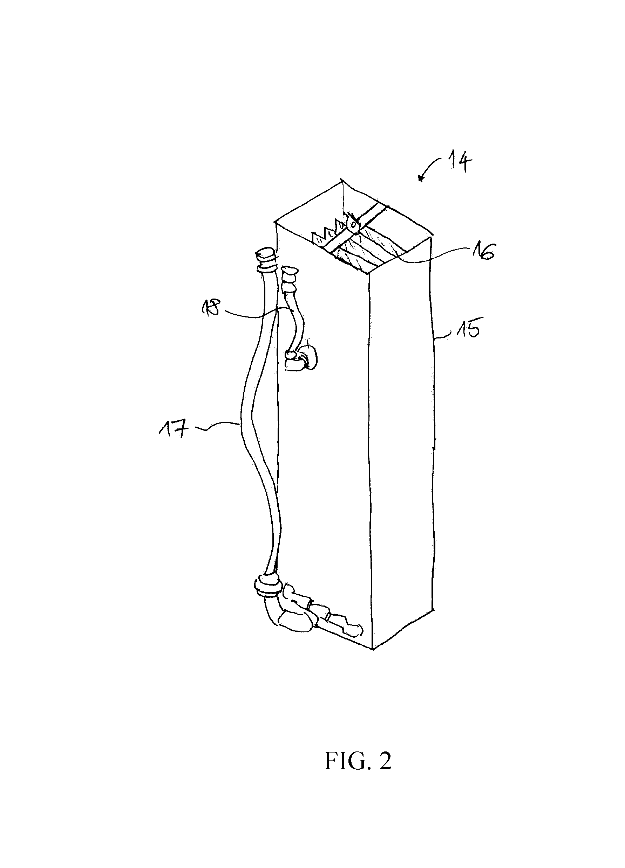

In Figure 2, the arrangement of the membrane type filtering module 14 is schematically illustrated. Preferably, the filtering module 14 is made of metal and comprises a plurality of membranes 16 with a pore size of up to 40-50 nm. The housing 15 of the filtering module 14 is made of metal when the membranes have a large surface, for example a surface grater than 10 m², whereas for membranes with smaller surfaces, said housing 15 is made of plastic. The air used for circulating the sludge is directed into the housing 15 through a flexible tube 17 connected to the bottom of the housing 15, said housing being open both at the bottom and at the top thereof. The air injected at the bottom of the filtering module 14 immediately decomposes into air bubbles which tend to move upwards and thereby they entrain the sludge particles, causing the sludge to flow through the membranes 16 inside the filtering module 14.

Because of the vibration, the permeate should also be discharged from the filtering module 14 through a flexible tube 18. The tube 18 is sealingly connected to a pipe 24 for discharging the permeate from the container 12, as shown in Figure 1.

For the membrane-type filtering module of the apparatus according to the invention, the waste-water treatment module Bio-Cel BC 10-10 merchandized by Microdyn-Nadir GmbH may be suitable, however, because of the vibration some minor modifications should be made therein (e.g. the rigid plastic pipes are to be replaced with flexible tubes, a suspension member on the top thereof is to be formed for the vibrating arm of the vibrator, springs are to be mounted at the bottom, etc.).

Even despite the vibration, the use of air bubbles and the addition of a granulate, a certain amount of sludge can adhere on the surface of the membranes 16 or in the pores thereof, in particular at the lower part of the membranes 16, where the concentrated sludge accumulates, which results in a significant reduction of the filtration efficiency at the bottom of the membranes 16. In order to avoid this problem, a particularly preferred embodiment of the apparatus according to the invention is provided with a control unit adapted to reverse the sludge flow direction at a predetermined interval for a predetermined period, thereby a so called backwashing is performed. During such a backwashing, by means of an appropriate controlling of the pumps, the permeate is directed back to the filtering module 14 through pipes 18, 28, while sludge is being removed from the container 12 by pumping. At the same time, the injection of air into the filtering module 14 is maintained and the developing bubbles make the backwashing even more efficient. After the backwashing the cleaned membranes 16 will be capable of filtering at a maximum flow rate again.

Utilization of the vibration-type sludge separation apparatus according to the invention has the following advantages. First of all, the sludge phase, which is 4-5 times more concentrated than produced in the prior art, requires proportionally smaller transfer and storage capacities, and also provides an excellent raw material for biogas production. Secondly, due to the extremely low pore sizes of the membranes, a permeate with very high purity may be produced, which contains only low molecular weight pigments and corresponding to the pore size, organic materials with a diameter of at most 40 to 50 nm. This means that a permeate with almost drinking-water purity may be produced. Additionally, any chemical treatment for the purification of the permeate, which has been commonly used before, becomes unnecessary, and therefore the apparatus according to the invention is also advantageous from the point of view of environment protection.

Now the basic steps of the method according to the invention will be described. In the method, an input sludge with low solid material content is fed into a container, in which a membrane-type filtering module is moveably mounted. The filtering module in the container is continuously vibrated at a predetermined frequency and a substantially constant amplitude to reduce the volume of the sludge adhering on the membranes. The vibration amplitude of the filtering module is set to a basic value by taking the parameters of the input sludge and the filtration process into account, however, the actual vibration amplitude can be somewhat different from the preset reference value depending on the extent of adherence of the sludge on the membranes.

Simultaneously with vibrating the filtering module, air is directed into the filtering module to circulate the sludge. The air is injected into the sludge phase of relatively high density accumulating at the bottom of the filtering module. At the injection of the air the air bubbles developed in the sludge tend to move upwards and entrain the sludge particles upwards inside the filtering module. The sludge (thus enriched with air) flows out from the filtering module at the top thereof and then it is directed outside the filtering module back to the bottom of the container, thus providing a circulation of the sludge within the container.

The concentrated sludge phase, the permeate filtered by the membrane-type filtering module, as well as the injected air and the gases releasing from the sludge are all discharged from the container through corresponding pipes and if necessary, they are subject to further technological processes (e.g. purification, filtration, sterilization, etc.).

In an exemplary embodiment of the method, an appropriate granulate is added to the sludge in the container, thereby the concentrated sludge (accumulating at the bottom of the filtration container) is disintegrated. The sludge of disintegrated structure gets more viscose, allowing a more efficient circulation, and finally leading to a more efficient filtration. As mentioned above, the granulate may include plastic granules or any kind of adsorbing granules, such as organic granules, preferably made from activated carbon, or inorganic granules, preferably made from zeolite.

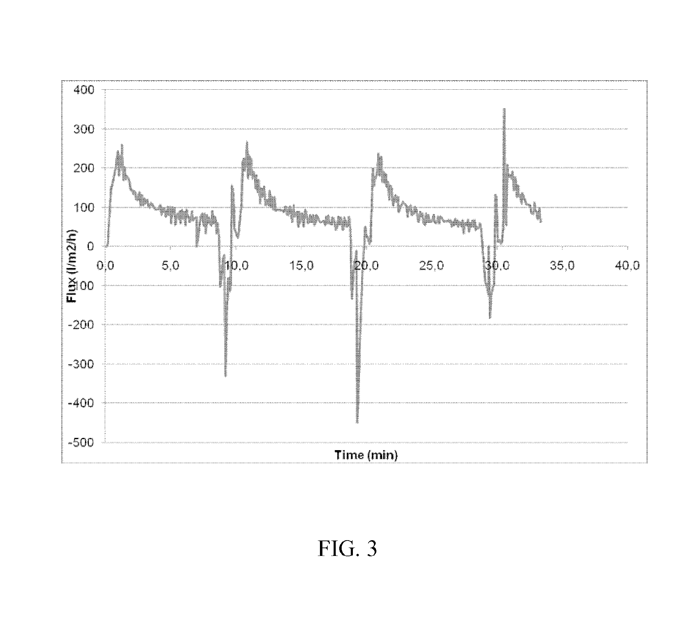

In a preferred embodiment of the method according to the invention, a backwashing is carried out in the container at a predefined time interval wherein a certain amount of permeate is directed back to the filtering module while sludge is being removed from the container by pumping. In Figure 3, a graph of this operating mode is shown, in which the specific flow rate of the sludge flowing through the membrane-type filtering module as a function of time is depicted for a preferred embodiment of the method according to the invention.

As can be clearly seen in Figure 3, due to the vibration of the membrane-type filtering module and the air injection, a very high specific flow rate amounting to approximately 200-300 l/m²h will be initially achieved, which, after a few minutes, starts to slowly decrease because of the pores' clogging, and it stabilizes at about 80-100 l/m²h. After approximately 9 minutes, a backwashing is performed for a period of approximately 1 minute, during which the reverse flow (i.e. the flow of the filtered water through the membranes) can achieve a specific flow rate of as high as - 300 to - 400 l/m²h in a very short time, which indicates that the major portion of the sludge has come apart from the membranes.

After backwashing the filtering phase is started again with resulting in a maximum flow rate through the cleaned membranes in a very short time. As can be seen in the graph, in this exemplary operating mode, the entire filtration-backwashing cycle requires approximately 10 minutes.

Although in the foregoing, the apparatus and the method according to the invention have been described through various embodiments thereof, it is obvious for a person skilled in the art that many other embodiments of the invention are also possible and all of them fall into the scope of the invention specified by the attached claims.

## Claims

1. A method for sludge filtration comprising
- providing a filtering module (14) inside a container (12), said filtering module comprising micro-porous membranes and being open both at the bottom and at the top thereof,
- feeding sludge with relatively low solid material content into the container (12),
- vibrating the filtering module (14) at a predetermined frequency and at a substantially constant amplitude by means of an external vibrator (30),
- injecting air into the bottom of the filtering module (14) thereby circulating the sludge within the container (12), and
- discharging, from the container (12), the concentrated sludge and the permeate, as well as the injected air and the gases releasing from the sludge.

2. The method of claim 1, wherein one or more granulate selected from the following group is added to the sludge within the container (12): plastic granulate, adsorbing organic granulate, preferably activated carbon granules, adsorbing inorganic granulate, preferably zeolite granules.

3. The method of claim 1 or 2, wherein backwashing is performed in the container (12) at predetermined intervals in such a way that some permeate is directed back to the filtering module (14) while some sludge is removed from the container (12) by pumping.

4. An apparatus for sludge filtration, the apparatus (10) comprising a container (12) and a membrane-type filtering module (14) arranged inside the container and formed open both at the bottom and at the top thereof, and wherein a pipe (20) for feeding sludge with relatively low density into the container, a pipe (22) for discharging the concentrated sludge from the container and a pipe (24) for discharging the permeate are connected to the container (12), **characterized in that** the apparatus (10) further comprises:
- a vibrator (30) for vibrating the filtering module (14) at a predetermined frequency and at a substantially constant amplitude during the filtration process,
- pipes (26, 28) for conveying the circulation air to the container (12) and for conveying, from the container (12), the air and the gases releasing from the sludge during the filtration process, and
- a flexible tube (17) arranged inside the container (12) for conveying the circulation air to the bottom of the filtering module (14), and another flexible tube (18) arranged inside the container (12) for conveying the permeate.

5. The apparatus of claim 4, wherein the vibrator (30) is coupled to the filtering module (14) by means of a hydraulic cylinder.

6. The apparatus of claim 4 or 5, wherein the filtering module (14) is joined to the bottom of the container (12) by means of springs (19), preferably conical spiral springs, arranged at the bottom of the filtering module (12).

7. The apparatus of any preceding claims, wherein the container (12) comprises guiding elements for vertically guiding the filtering module (14).

8. The apparatus of any preceding claims, wherein a pipe for feeding granulate is connected to the container (12).

9. The apparatus of any preceding claims, wherein for the purpose of backwashing, the filtering module (14) is adapted to direct the permeate back into the filtering module (14).
